# EUROPÄISCHE PATENTSCHRIFT

(11) **EP 1 222 414 B1**
(45) Veröffentlichungstag und Bekanntmachung des Hinweises auf die Patenterteilung: **19.03.2008**
(21) Anmeldenummer: 00992441.6
(22) Anmeldetag: 20.10.2000
(51) Int. Cl.: F16H 61/00, F16H 57/04

(54) **GETRIEBEBAUEINHEIT UND STEUERPLATTFORM FÜR DEN EINSATZ IN EINER GETRIEBEBAUEINHEIT**
TRANSMISSION ASSEMBLY AND CONTROL PLATFORM TO BE USED IN A TRANSMISSION ASSEMBLY
ENSEMBLE DE TRANSMISSION ET PLATE-FORME DE COMMANDE UTILISEE DANS UN TEL ENSEMBLE

(30) Priorität: 22.10.1999 DE 19950967
(43) Veröffentlichungstag der Anmeldung: 17.07.2002
(73) Patentinhaber: Voith Turbo GmbH & Co. KG, 89522 Heidenheim (DE)
(72) Erfinder: NITSCHE, Martin, 89547 Gerstetten (DE)
(74) Vertreter: Dr. Weitzel & Partner
(86) Internationale Anmeldenummer: PCT/EP2000/010344
(87) Internationale Veröffentlichungsnummer: WO 2001/029454

(56) Entgegenhaltungen:
- EP-A- 0 443 638
- EP-A- 1 054 192
- DE-A- 4 134 369
- US-A- 5 305 663

## Beschreibung

Die Erfindung betrifft eine Getriebebaueinheit, im einzelnen mit den Merkmalen aus dem Oberbegriff des Anspruchs 1; ferner eine Steuerplattform für den Einsatz in einer Getriebebaueinheit.

Getriebebaueinheiten, bei welchen der Wechsel zwischen den einzelnen Gangstufen in bestimmten Fahrzuständen automatisch in Abhängigkeit von dem aktuellen Fahrerwunsch und/oder den aktuellen Fahrzustand wenigstens mittelbar beschreibenden Größen erfolgt, sind in einer Vielzahl von Ausführungen bekannt. Diese sind beispielsweise als Wandlergetriebe, umfassend wenigstens einen hydrodynamischen Wandler und mechanische Drehzahi-/Drehmomentenwandlungseinrichtungen, wie beispielsweise in der Druckschrift Voith: "Hydrodynamik in der Antriebstechnik", Vereinigte Fachverlage, Krauskopf Ingenieur Digest, Mainz 1987, Seite 151 bis 195 beschrieben, ausgeführt. Zur optimalen Anpassung des Übertragungsverhaltens ist der Getriebebaueinheit eine Steuervorrichtung zur elektronischen Ansteuerung der einzelnen Drehzahl/Drehmomentenwandlungseinrichtungen zugeordnet. Die Aktivierung und der Betrieb der Betätigungseinrichtungen zur Änderung der Funktionsweise erfolgt dabei üblicherweise hydraulisch mittels einer hydraulischen Steuervorrichtung, welche an beliebiger Stelle im Getriebe integriert sein kann. Bezüglich der Kopplung zwischen elektrischer und hydraulischer Steuervorrichtung bestehen daher eine Vielzahl von Möglichkeiten, welche neben dem unterschiedlichen Bauraumbedarf eine erheblich größere Leitungslänge bedingen. Entsprechend den Ausführungen des Standes der Technik wird die Getriebesteuervorrichtung getrennt vom Gehäuse des Automatikgetriebes im Fahrzeug angeordnet. Da üblicherweise die Gehäuse der Getriebebaueinheit und der Steuervorrichtung an unterschiedlichen Orten hergestellt werden und erst während des Zusammenbaus im Fahrzeug miteinander in Wirkverbindung gebracht werden, werden jeweils willkürlich ausgewählte Getriebebaueinheiten mit einer willkürlich ausgewählten elektronischen Steuervorrichtung verbunden. Selbst wenn Gangübersetzungs- oder Umschaltkennlinien eine gewisse Änderung oder Abweichung in ihrer Ausgangscharakteristik in Bezug auf ein Einschaltverhältnis einer Magnetspule zeigen, die zur Steuerung des Gangwechsels verwendet wird, kann es daher nicht möglich sein, diese Variationen mit Hilfe der elektronischen Steuervorrichtung zu korrigieren.

Neben derartigen, hinsichtlich der konstruktiven Ausführung autarken Getriebesteuervorrichtungen sind auch Getriebesteuervorrichtungen bekannt, welche in das Fahrzeugmanagementsystem integriert sind, wie beispielsweise in der Druckschrift EP 0 373 849 A2 beschrieben.

Nachteilig an den bekannten Getriebesteuervorrichtungen ist, daß für Getriebe gleichen Typs die Steuerungen stets identisch eingestellt sind, um beispielsweise eine leichte Tauschbarkeit zu gewährleisten, das heißt, bestimmte Toleranzen können nicht ausgeschlossen werden. Derartige Getriebesteuervorrichtungen sind somit nicht auf die individuell im Fahrzeug eingebaute Getriebebaueinheit abgeglichen. Wird andererseits die Getriebesteuereinrichtung auf eine Getriebebaueinheit abgeglichen, so muß beim Getriebeaustausch die Steuerung, beispielsweise die ECU, entsprechend umprogrammiert werden. Dies ist sehr arbeitsintensiv.

Des weiteren sind die aus dem Stand der Technik bekannten Getriebesteuervorrichtungen dadurch charakterisiert, daß zur Realisierung der erforderlichen elektrischen Verbindungen, beispielsweise der elektrischen Verbindungen zwischen bestimmten, die aktuellen Fahrzustände charakterisierende Größen erfassenden Sensoren und/oder Sensoren zur Erfassung des Fahrerwunsches und einer übergeordneten Steuervorrichtung und/oder der Getriebesteuervorrichtung und den Aktoren, welche in der Regel eine hydraulische Steuerrichtung umfassen, eine Vielzahl von Steckverbindungen und Leitungen vorzusehen sind. Aufgrund der hohen Anzahl möglicher Störstellen weisen derartige Systeme daher eine geringere Zuverlässigkeit auf. Auch benötigen die einzelnen Elemente der Getriebesteuervorrichtung und deren Kopplung mit der hydraulischen Steuervorrichtung entsprechend Bauraum und es ist keine einfache Austauschbarkeit diese Elemente gegen Elemente anderer Auslegung gegeben.

Aus dem Dokument US-A-5 305 663 ist eine Getriebebaueinheit beziehungsweise eine Steuerungsplattform einer Getriebebaueinheit mit den Merkmalen Jeweils des Oberbegriffs der Ansprüche 1 und 14 offenbart.

Das Dokument EP-A-0 443 638 beschreibt einen Deckel für ein Automatikgetriebe von Fahrzeugen, wobei im Deckel ein Verteiler mit einer Vielzahl von Kanälen angeordnet ist, und dieser Verteiler Teil eines Hydrauliksystems darstellt, der durch das Getriebeschaltsystem verwendet wird.

Das Dokument DE 41 34 369 A beschreibt ebenfalls ein Getriebegehäuse mit einem stirnseitigen vorderen Deckel, der in eine Zentrierplatte und eine Zwischenplatte geteilt ist, wobei die zentrierplatte und die Zwischenplatte in ihren radial äußeren Bereichen mit dem Getriebegehäuse verspannt sind. In die Zentrierplatte ist eine Primärpumpe eingesetzt. Ferner können durch Ausbildung des vorderen Deckels als Zentrierplatte und Zwischenplatte Ansaug- und Druckleitungen sowie Steuermittelleitungen in einfacher Weise durch nutförmige Vertiefungen in der Zentrierplatte sowie der Zwischenplatte hergestellt werden.

Der Erfindung lag daher die Aufgabe zugrunde, eine Lösung für eine Getriebebaueinheit zu entwickeln, welche die zuvor aufgezeigten Nachteile vermeidet und mit welcher mit möglichst geringem Aufwand leicht austauschbare Einheiten, Insbesondere der einzelnen Steuervorrichtungenhydraulische und elektrische - möglich ist. Die erfindungsgemäße Lösung soll sich dabei durch einen geringen konstruktiven und fertigungstechnischen Aufwand auszeichnen.

Die erfindungsgemäße Lösung ist durch die Merkmale der Ansprüche 1 und 14 charakterisiert, Vorteilhafte Ausgestaltungen sind jeweils in den Unteransprüchen wiedergegeben.

Erfindungsgemäß wird bei einer Getriebebaueinheit, umfassend ein Getriebegehäuse, eine hydraulische Steuervorrichtung und eine, der Getriebebaueinheit zugeordnete elektronische Steuervorrichtung, umfassend wenigstens eine elektronische Steuereinrichtung, die elektronische Steuereinrichtung im Getriebegehäuse in unmittelbarer räumlicher Nähe zur hydraulischen Steuervorrichtung angeordnet. Unter elektronische Steuereinrichtung wird dabei das Steuergerät beziehungsweise eine Einheit aus elektrischen und elektronischen Bauelementen verstanden, welcher die zur Ansteuerung der Getriebebaueinheit erforderlichen Größen zugeführt und in dieser verarbeitet werden, und die aus den Eingangsgrößen entsprechend des gewünschten Ansteuervorganges gebildete Stellgrößen ausgibt Die

Steuereinrichtung umfaßt in der Regel eine Mehrzahl elektrischer und elektronischer Bauelemente, welche entsprechend der vorzunehmenden Verarbeitung der Eingangsgrößen einander zugeordnet und miteinander gekoppelt sind. Vorzugsweise sind eine Mehrzahl der elektrischen und/oder elektronischen Bauelemente auf wenigstens einer Trägerplatte gemeinsam angeordnet und werden von einem Steuereinrichtungsgehäuse umschlossen. Dabei besteht die Möglichkeit, daß die Trägerplatte vollständig im Steuereinrichtungsgehäuse integriert ist oder aber wenigstens einen Teilwandbereich des Steuereinrichtungsgehäuses bildet.

Die elektronische Steuervorrichtung umfaßt neben der Steuereinrichtung Einrichtungen zur Erfaßung der Eingangsgrößen und Mittel zur Kopplung der Einrichtungen mit der Steuereinrichtung, des weiteren Mittel zur Kopplung mit den entsprechenden Stellelementen zur Betätigung der Stelleinrichtungen, die den einzelnen Getriebeelementen der Getriebebaueinheit zur Änderung der Funktions- oder Btriebsweise zugeordnet sind. Da die Stelleinrichtungen in Form von Aktoren auch Bestandteil der hydraulischen Steuervorrichtung sein können, können die Mittel zur Kopplung dann sowohl der elektronischen als auch der hydraulischen Steuervorrichtung zugeordnet werden.

Unter einem weiteren Aspekt der Erfindung ist die gesamte elektronische Steuervorrichtung im Getriebegehäuse integriert und in unmittelbar räumlicher Nähe zur hydraulischen Steuervorrichtung angeordnet. Dies bedeutet, daß eine Mehrzahl, vorzugsweise alle Einrichtungen zur Erfassung einer den Fahrzustand und/oder die Funktionsweise der Getriebebaueinheit wenigstens mittelbar charakterisierenden Größen mit in der Getriebebaueinheit integriert sind und in räumlicher Nähe zur hydraulischen Steuervorrichtung angeordnet sind.

Unter hydraulischer Steuervorrichtung werden dabei die hydraulischen Verbindungen zwischen den Erfassungsmitteln einer Eingangsgröße und/oder der elektrischen Steuervorrichtung und den Stelleinrichtungen, weiche in der Regel hydraulisch durch einen Druck beaufschlagt werden und die als Aktoren fungierenden Elemente und deren Kopplung mit den Stellelementen verstanden. Einbezogen werden dabei im wesentlichen alle, zur Betätigung beziehungsweise Einstellung der einzelnen Gangstufen erforderlichen zu betätigenden Elemente.

Die erfindungsgemäße Lösung bietet den Vorteil einer erhöhten Zuverlässigkeit, da die Anzahl und Länge der zur elektrischen Kopplung erforderlichen Leitungsverbindungen durch Integration der Steuervorrichtung im Gehäuse gegenüber den konventionellen Lösungen erheblich geringer ist Des weiteren wird durch die Anordnung der elektronischen Steuervorrichtung in der Getriebebaueinheit eine individuelle Abstimmung der Steuervorrichtung auf die jeweilige Getriebebaueinheit möglich, ohne daß bei einem Austausch der Getriebebaueinheit eine Umprogrammierung der Steuereinrichtung vorgenommen werden muß. Die eindeutige Zuordnung von Getriebebaueinheit und elektrischer Steuervorrichtung ermöglicht eine Vereinfachung der Logistik. Die bauliche Integration der elektronischen und hydraulischen Steuervorrichtung in der Getriebebaueinheit ermöglicht die Schaffung einer prüfbaren Einheit von Steuervorrichtung, Steuerhydraulik, Aktuatorik und Sensorik der Getriebebaueinheit, wobei die Steuervorrichtung bereits an die getriebespezifischen Toleranzen während des Prüfvorganges anpassbar ist

Vorzugsweise sind die elektronische Steuereinrichtung und die hydraulische Steuervorrichtung in Einbaulage unterhalb der Getriebesymmetrieachse angeordnet. Dies bietet den Vorteil, daß beide Elemente leicht zugänglich und austauschbar sind.

Bezüglich der räumlich nahen Anordnung der beiden Steuervorrichtungen - elektronischer Steuervorrichtung und hydraulischer Steuervorrichtung - bestehen eine Vielzahl von Möglichkeiten. Denkbar sind dabei
a) eine Anordnung von hydraulischer Steuervorrichtung und elektronischer Steuereinrichtung oder elektronischer Steuervorrichtung in horizontaler Richtung nebeneinander und in vertikaler Richtung betrachtet in einer Ebene, d.h. ohne Versatz;
b) Anordnung der hydraulischen Steuervorrichtung und der elektronischen Steuereinrichtung oder Steuervorrichtung in horizontaler Richtung nebeneinander und in vertikaler Richtung versetzt zueinander,
c) Anordnung in horizontaler Richtung betrachtet übereinander.

Vorzugsweise ist dabei jeder der Steuervor- bzw. einrichtungen - elektronische Steuereinrichtung und hydraulische Steuervorrichtung - ein entsprechendes Trägerelement zugeordnet, welche miteinander zu einer Trageinrichtung verbindbar sind, so daß eine Baueinheit, umfassend wenigstens die elektronische Steuereinrichtung und die hydraulische Steuervorrichtung bildbar ist. Diese kann dann auf einfache Art und Weise in ihrer Gesamtheit aus der Getriebebaueinheit herausgenommen werden. Eine weitere Möglichkeit besteht darin, beide - die elektronische Steuereinrichtung der elektronischen Steuervorrichtung und hydraulische Steuervorrichtung - auf einem zentralen Trägerelement anzuordnen und ebenfalls eine Baueinheit zu bilden. In beiden Fällen wir dabei die gesamte Baueinheit aus Trägerelement bzw. Trägerelementen, hydraulischer Steuervorrichtung und elektronischer Steuereinrichtung als Steuerungsplattform bezeichnet, die als handelbare Baueinheit anbietbar ist.

Erfindungsgemäß ist dem Betriebsmittel- und/oder Steuermittel und/oder Schmiermittelkreislauf der Getriebebaueinheit eine Kühleinrichtung zugeordnet und im Getriebegehäuse integriert. Diese kann verschiedenartig ausgestaltet sein, umfaßt jedoch in der Regel entweder wenigstens einen Kühler, ein oder mehrere Kühlelemente und/oder einen Wärmetauscher. Die Anordnung der Kühleinrichtung erfolgt dabei vorzugsweise neben oder oberhalb oder unterhalb wenigstens einer der beiden Vorrichtungen - elektronischer Steuervorrichtung bzw. elektronischer Steuereinrichtung oder hydraulischer Steuervorrichtung - beziehungsweise zwischen beiden. Damit kann zusätzlich eine optimale Kühlung der elektronischen Baueinheit erzielt werden.

Zur Schaffung einer besonders kompakten Baueinheit, bzw. zur besonders einfachen Führung der Hydraulikflüssigkeit, umfaßt die hydraulische Steuervorrichtung eine Kanalplatte zur Ölführung für die hydraulische Steuerung, weiche von der Verschlußplatte des Kühlers bzw. der Kühleinrichtung ausgebildet ist. Das Gehäuse der Kühleinrichtung kann unter einem weiteren Aspekt zusätzlich aus der Ölwanne der Getriebebaueinheit und der Kanalplatte der hydraulischen Steuerung gebildet werden. Dies bietet den Vorteil, da diese Teile in einem Automatgetriebe ohnehin vorhanden sind, auf ein separates Gehäuse für die Kühleinrichtung verzichten zu können. In einer besonders vorteilhaften Ausführung wird bei der Ausformung der Ölwanne das Gehäuse der Kühleinrichtung derart mit ausgeformt, daß das Öl in der Ölwanne nicht in das Gehäuse der Kühleinrichtung gelangen kann und des weiteren das Gehäuse für die Kühleinrichtung nach unten hin in Einbaulage betrachtet offen ausgeführt ist, so daß das Gehäuse durch das Einbringen der Steuerungsplattform geschlossen wird. In diesem Fall wird eine einfache Austauschbarkeit der gesamten elektronischen und hydraulischen Steuervorrichtung mit Kühleinrichtungen ohne großen Motageaufwand möglich.

Ein weiterer erheblicher Vorteil bei der Integration der Kühleinrichtung in die Getriebebaueinheit besteht darin, daß aufwendige Schlauch- beziehungsweise Rohrverbindungen zwischen Getriebe und Kühleinrichtung entfallen können, desgleichen Halterungen, mit denen die Kühleinrichtung an der Getriebebaueinheit befestigt werden muß.

Die Kühleinrichtung wird dabei in Einbaulage der Getriebebaueinheit derart in die Ölwanne integriert, daß keine Vergrößerung der äußeren Getriebekontur gegenüber den konventionellen bekannten Lösungen erforderlich ist. Ein wesentlicher Vorteil einer derartigen Integration besteht darin, daß die Gesamtgetriebebaueinheit optimal und leichter in die immer kleiner werdenden beziehungsweise zur Verfügung stehenden Einbauräume eingepaßt werden kann.

Vorzugsweise werden Kühleinrichtung, elektronische Steuervorrichtung und hydraulische Steuervorrichtung auf einem gemeinsamen Trägerelement oder aber jeweils einem eigenen Trägerelement, welche miteinander zu einer Baueinheit zusammenfassbar sind, angeordnet und bilden eine sogenannte Steuerungsplattform. Vorzugsweise werden des weiteren ein Großteil der in der Regel als Sensoren ausgeführten Erfassungseinrichtungen zur Ermittlung der in der Steuervor- bzw. Einrichtung zu verarbeitenden Eingangsgrößen der Getriebebaueinheit mit auf der Steuerungsplattform angeordnet bzw. in dieser integriert, um eine noch kompaktere Baueinheit zu schaffen, welche leicht austauschbar ist. In diesem Fall wäre die Stuervorrichtung ebenfalls fast vollständig auf dem Trägerelement angeordnet.

Unter einem weiteren Aspekt der Erfindung werden zusätzlich weitere Bauelemente, beispielsweise eine Ölpumpe mit Saugfilter, Feinfilter und sämtliche Ölverbindungen sowie die erforderlichen Sensoren auf der Steuerungsplattform angeordnet. Diese Anordnung ermöglicht die komplette Verkabelung aller Aktoren und Sensoren und eine separate Prüfung aller Sensoren und Aktoren einschließlich der Ölversorgung von Steckverbindungen unabhängig von der Integration dieser Funktionselemente in die Getriebebaueinheit.

Unter einem weiteren Aspekt der Erfindung ist der elektronischen Steuervorrichtung ein Gehäuse zugeordnet, welches vorzugsweise gegen Hydraulikflüssigkeit, beispielsweise Öl und/oder eine andere Flüssigkeit dicht ausgeführt ist. Die Steuereinrichtung kann dann ebenfalls im Ölsumpf der Getriebebaueinheit angeordnet werden. Dadurch besteht die Möglichkeit, die elektrischen und elektronischen Bauelemente der Steuereinrichtung einer wenigstens indirekten Kühlung durch das im Betriebsmittel- bzw. Ölsumpf der Getriebebaueinheit befindliche Betriebsmittel auszusetzen. Die öldichte Ausführung des Gehäuses bedingt jedoch zur Realisierung der elektrischen Verbindung zwischen der Steuereinrichtung und den, zur Erfassung der, den aktuellen Fahrzustand wenigstens mittelbar charakterisierenden Größen und/oder des Fahrerwunsches und/oder weiterer Randbedingungen erforderlichen Sensoren der Steuervorrichtung und den mittels der Steuervorrichtung anzusteuernden Aktoren zur Betätigung der einzelnen Elemente der Getriebebaueinheit, beispielsweise zur Realisierung des Gangwechsels und/oder zur Vorgabe von Eingangsgrößen durch eine übergeordnete Steuer- bzw. Regelvorrichtung, eine entsprechend gestaltete Durchführung am Gehäuse. Vorzugsweise werden dabei die einzelnen Kontaktelemente beziehungsweise Leitungen in einem elektrisch nicht leitfähigen und flüssigkeitsdichtem Material eingebettet durch das Steuereinrichtungsgehäuse geführt, so daß das Eindringen von schädlichen Stoffen, wie beispielsweise Öl, verhindert wird.

Die Anordnung der Steuereinrichtung im in Einbaulage unteren Bereich der Getriebebaueinheit und das Vorsehen eines entsprechenden Gehäuses ermöglicht es, die Sensoren zur Erfassung der einzelnen, die Betriebsweise der einzelnen Elemente der Getriebebaueinheit zu einem bestimmten Zeitpunkt wenigstens mittelbar beschreibenden Größen ebenfalls im Bereich unterhalb der Getriebemittellinie, welche der Rotationsachse entspricht, anzuordnen und somit die gesamte Steuervorrichtung relativ kompakt auszuführen. Die beschriebene Anordnung im Ölsumpf, welcher in der Regel in einer Ölwanne angesammelt wird, die vom Unterteil des Getriebes gebildet wird, erlaubt es desweiteren, die Steuervorrichtung komplett mit der dazugehörigen Steuerhydraulik, der Aktorik zur Betätigung der einzelnen Schaltelemente und den Sensoren, welche in der Regel am Gehäuse der Ölwanne angeordnet sind, auf einfache Art und Weise zu demontieren und separat als Gesamteinheit der Funktionstüchtigkeit, evl, zusätzlich unter bestimmten vordefinierbaren Bedingungen zu prüfen.

Zur Sicherstellung der Verbindung zwischen den mit der Steuereinrichtung gekoppelten Elementen, wie Sensoren, Aktoren und/oder einer weiteren Steuervorrichtung erfolgt die Verbindung zwischen den einzelnen Kontakten und der Steuereinrichtung, insbesondere den auf der Trägerplatte in Form einer Elektronikplatine angeordneten elektrischen Bauelementen derart, daß diese als Federkontakte ausgeführt sind, so daß die Federn die Kontakte auf die Kontaktstellen der Elektronikplatine pressen. Alternativ können Verbindungen mittels angelöteten oder geschweißten Drähten oder in Form von steckbaren Verbindungen hergestellt werden.

Die elektrischen Verbindungen zwischen den Sensoren, Aktoren und der Steuereinrichtung der Getriebebaueinheit können in Form von
a) flexiblen Kabelverbindungen und/oder
b) starren Leiterbahnen, beispielsweise aus Kupfer,
ausgeführt werden. In der Regel werden dabei flexible Kabelverbindungen bevorzugt angewandt, da diese hinsichtlich der Leitungsführung einfach anpassbar sind.

Um eine thermische Überlastung der elektronischen Steuervorrichtung aufgrund der Wänneentwicklung in der Getriebebaueinheit zu verhindern, ist mit Vorteil vorgesehen, daß die elektronische Steuereinrichtung, welche im Gehäuse der Getriebebaueinheit integriert ist, wärmetechnisch von diesem entkoppelt wird, beispielsweise durch eine wärmeisolierende Zwischenschicht. Das Gehäuse der elektronischen Steuereinrichtung ist dabei beispielsweise bei Anordnung im Ölsumpf der Getriebebaueinheit zum Ölsumpf hin mit einem wärmedämmenden Medium gegen zu großen Wärmeübergang vom heißen Öl auf die elektronischen Bauelemente geschützt. Diesbezüglich besteht die Möglichkeit, entweder das Gehäuse mit einer Beschichtung aus einem wärmedämmenden Medium zu versehen oder aber Teile der Gehäusewandung aus einem wärmedämmenden Material zu fertigen.

Besonders vorteilhaft ist es des weiteren, die elektronische Steuereinrichtung nicht nur wärmetechnisch von der Getriebebaueinheit zu entkoppeln sondern auch schwingungstechnisch, beispielsweise dadurch, daß die elektronische Steuereinrichtung schwingungsgedämpft in der Getriebebaueinheit aufgehängt ist.

In einer weiteren fortgebildeten Ausführungsform sind der Steuereinrichtung Mittel zur wenigstens indirekten Abfuhr von Wärme von den elektrischen Bauelementen der Steuereinrichtung zugeordnet. Diese Mittel fungieren nach dem Prinzip der Wärmeleitung oder des Wärmeüberganges. Im erstgenannten Fall sind beispielsweise die, die elektronischen Bauelemente tragenden Trägerplatten gut wärmeleitend mit dem Boden des Gehäuses der Steuervorrichtung verbunden. Vorzugsweise wird dazu eine Verbindung gewählt, welche Wärmeleitung ermöglicht. Dies kann beispielsweise mittels einer Klebverbindung realisiert werden. Eine andere Möglichkeit der Wärmeabfuhr durch wenigstens indirekte Kühlung besteht darin, kühlmittelführende Kanäle vorzusehen, welche aufgrund des Wärmeüberganges von den elektronischen Bauelementen auf das Kühlmittel die Wärme von den elektronischen Bauelementen abführen. Bei den Kühlkanälen kann es sich dabei um separate Kanäle in Form von rohrförmigen Elementen oder Leitungen handeln. Vorzugsweise sind die Kühlkanäle jedoch direkt in die Wandung des Gehäuses der Steuereinrichtung eingearbeitet. Dabei besteht die Möglichkeit, daß beispielsweise der Boden, und/oder die Seitenwände und/oder die Oberseite des Gehäuses in Einbaulage in der Getriebebaueinheit betrachtet den Deckel eines Kühlwasserkanals beziehungsweise eines Kuhlwasservorlaufes bilden. Bezüglich der Anordnung der Kühlmittelkanäle bzw. der Kühlmittelleitungen bestehen eine Vielzahl von Möglichkeiten. Diese können beispielsweise Bestandteil
a) eines der Steuervorrichtung der Getriebebaueinheit zugeordneten autarken Kühlkreislaufes
b) des der Getriebebaueinheit zugeordneten Kühlkreislaufes
c) eines, einem anderen Element im Fahrzeug zugeordneten Kühlkreislaufes
d) des Fahrzeugkühlkreislaufes
sein. Denkbar ist auch die Kopplung des separaten Kühlkreislaufes der Steuereinrichtung der Getriebebaueinheit mit anderen Kühlkreisläufen im Fahrzeug. Zur Verringerung der Bauteilanzahl und der Länge der bereitzustellenden Leitungen zum Zweck der Kühlung von einzelnen Aggregaten sind die Kühlmittelkanäle bzw. die Kühlmittelleitungen der Steuereinrichtung der Getriebebaueinheit vorzugsweise in einem ehedem vorzusehenden Kühlmittelkreislauf integriert.

Die elektronische Steuereinrichtung umfaßt wenigstens einen Eingang, welcher mit den, zur wenigstens mittelbaren Erfassung eines Ist-Wertes einer Größe für einen aktuellen Fahrerwunsch und/oder eines Fahrzustandes vorgesehenen Sensoren und/oder einer weiteren Steuervorrichtung koppelbar ist. Des weiteren ist wenigstens ein Ausgang vorgesehen, welcher mit den Aktuatoren, beispielsweise in Form der Steuerhydraulik zur Betätigung von Schaltelementen, koppelbar ist. Bei Anordnung des Gehäuses der Steuereinrichtung im Ölsumpf der Getriebebaueinheit und der öldichten Ausführung des Gehäuses der Steuereinrichtung sind entsprechende Vorrichtungen zur Durchführung von elektrischen Leitungsverbindungen beziehungsweise Kabeln vorzusehen. Die Vorrichtung zur Kabeldurchführung zur Realisierung eines Überganges von Kabeln von einem mit einem Schmieroder Betriebsmittel oder ähnlichem wenigstens teilweise befüllten oder Rückstände enthaltenden und durch ein Gehäuse wenigstens teilweise umschlossenen Raumbereich nach außerhalb des Raumbereiches umfaßt einen aus elektrisch nicht leitfähigem Material bestehenden Isolierkörper zur Durchführung der Kabelelemente, welcher aus einem elektrisch nicht leitfähigen und gegenüber Flüssigkeiten undurchlässigen Material besteht.

Die erfindungsgemäße Lösung ermöglicht es des weiteren, eine Steuerungsplattform als bauliche Einheit zu schaffen, welche die hydraulische Steuervorrichtung, die elektrische Steuervorrichtung und die Kühleinrichtung einschließlich der Aktoren und Sensoren sowie der Ölkreisläufe enthält. Diese Elemente sind dazu auf einer gemeinsamen Trageinrichtung, welche auch aus mehreren Trägerelementen gebildet werden kann, angeordnet und vorzugsweise im Getriebeghäuse einer Getriebebaueinheit in der Ölwanne integrierbar. Diese Lösung bietet, wie bereits an anderer Stelle ausgeführt, den Vorteil, der Schaffung einer komplett für sich allein ohne Integration in die Getriebebaueinheit realisierbaren Prüfung der Hydraulik und der Funktionsweise der elektronischen Steuerung.

Die erfindungsgemäße Lösung ist nachfolgend anhand von Figuren erläutert. Darin ist im einzelnen folgendes dargestellt:
- Figur 1: verdeutlicht anhand eines Ausschnittes eine erfindungsgemäß ausgeführte Getriebebaueinheit mit hydraulischer und elektronischer Steuervorrichtung;
- Figur 2: verdeutlicht in schematisch vereinfachter Darstellung den Aufbau einer Steuerungsplattform zur erfindungsgemäßen Integration in die Getriebebaueinheit in einer Ansicht von Oben;
- Figur 3: verdeutlicht eine Anicht auf die Getriebbaueinheit gemäß Figur 1 von Rechts;
- Die Figuren 4a bis 4c: verdeutlichen jeweils in einer Ansicht von oben die Ölwanne mit eingelegten Kühlelementen, die Kanalplatte und einen mit der Kanalplatte verschlossenen Wasserkasten, in welchem die Kühleinrichtung integriert ist.

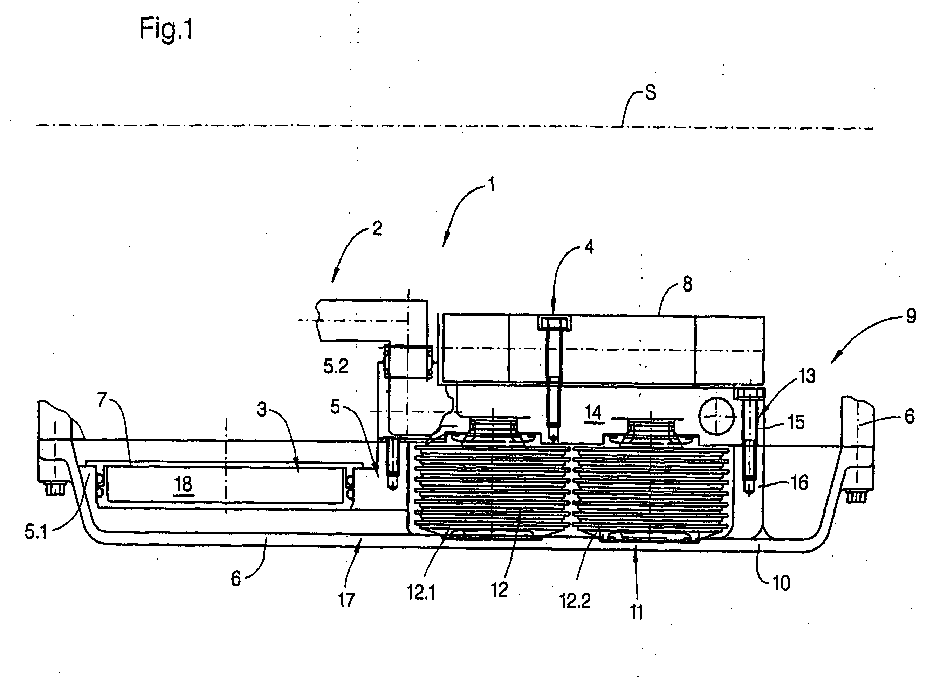

Die Figur 1 verdeutlicht in schematisch vereinfachter Darstellung einen Ausschnitt aus einer Getriebebaueinheit 1, welcher zur Realisierung unterschiedlicher Betriebsweisen, insbesondere der einzelnen Gangwechsel ein Steuersystem 2 zugeordnet ist. Aus Gründen einer vereinfachten Darstellung sind keine Elemente der Getriebebaueinheit 1, insbesondere zur Realisierung der Leistungsübertragung wiedergegeben. Das Steuersystem 2 umfaßt eine elektronische Steuervorrichtung 3 und eine hydraulische Steuervorrichtung 4. Die elektronische Steuervorrichtung 3 und die hydraulische Steuervorrichtung 4 sind dabei erfindungsgemäß in unmittelbarer räumlicher Nähe zueinander angeordnet. Vorzugsweise erfolgt die Anordnung unterhalb der Getriebesymmetrieachse S. Die Anordnung der elektronischen Steuervorrichtung 3 und der hydraulischen Steuervorrichtung 4 in unmittelbarer räumlicher Nähe zueinander ist dabei in der dargestellten Ausführung derart ausgeführt, daß diese in Einbaulage betrachtet in der

Getriebebaueinheit 1 im wesentlichen nebeneinander angeordnet sind. Im dargestellten Fall ist die hydraulische Steuervorrichtung in Einbaulage betrachtet in vertikaler Richtung gegenüber der elektronischen Steuervorrichtung 3 versetzt angeordnet. Es besteht jedoch auch die hier nicht dargestellte Möglichkeit, die elektronische Steuervorrichtung 3 und die hydraulische Steuervorrichtung 4 in einer gemeinsamen Ebene anzuordnen. Die elektronische Steuervorrichtung 3 und die hydraulische Steuervorrichtung 4 sind dabei in einer bevorzugten Ausführung wenigstens mittelbar auf einem gemeinsam nutzbaren Trägerelement 5 gelagert. Das Trägerelement 5 kann dabei einteilig oder mehrteilig ausgeführt werden. Im dargestellten Fall ist dieses wenigstens zweiteilig ausgeführt und umfaßt wenigstens ein erstes Trägerteilelement 5.1 und ein zweites Trägerteilelement 5.2. Das erste Trägerteilelement 5.1 dient dabei der Lagerung der elektronischen Steuervorrichtung 3, während auf dem zweiten Trägerteilelement 5.2 die hydraulische Steuervorrichtung 4 angeordnet ist. Die beiden Trägerteilelemente 5.1 und 5.2 sind zur Bildung einer Baueinheit in Form des Trägerelementes 5 miteinander lösbar verbindbar.

Das die elektronische Steuervorrichtung 3 und die hydraulische Steuervorrichtung 4 tragende Trägerelement 5 ist unterhalb der Getriebesymmetrieachse S der Getriebebaueinheit 1 im Gehäuse 6 der Getriebebaueinheit 1 integriert. Vorzugsweise weisen die elektronische Steuervorrichtung 3 und die hydraulische Steuervorrichtung 4 jeweils ein eigenes Gehäuse 7 bzw. 8 auf, wobei dieses ebenfalls vom Gehäuse 6 der Getriebebaueinheit gebildet werden kann. Die Anordnung des Trägerelementes 5 und damit des Steuersystems 2 kann dann im Bereich eines Betriebsmittel- bzw. Ölsumpfes 9 im Gehäuse 6 der Getriebebaueinheit 1 erfolgen. Dabei besteht die Möglichkeit, daß das Trägerelement 5 im Wandbereich einer Ölwanne 10 befestigbar ist. Denkbar sind bei geeigneter Ausführung des Trägerelementes 5 auch Lagerungs- bzw. Befestigungsmöglichkeiten an Gehäuseelementen des Gehäuses 6 der Getriebebaueinheit 1 außerhalb der Ölwanne 10, welche im montierten Zustand der Getriebebaueinheit 1 Bestandteil des Gehäuses 6 der Getriebebaueinheit 1 ist.

Unter einem weiteren Aspekt der Erfindung ist dem Steuersystem 2 eine Kühleinrichtung 11 zugeordnet. Die Kühleinrichtung 11 ist ebenfalls im Getriebegehäuse 6 integriert. In der gemäß Figur 1 besonders vorteilhaften Ausgestaltung ist die Kühleinrichtung 11, welche wenigstens einen Kühler 12 umfaßt, in der Ölwanne 10 integriert. Es sind Mittel 13 zur thermischen Kopplung der Kühleinrichtung mit dem Steuersystem 2 vorgesehen. Die Mittel zur thermischen Kopplung 13 umfassen dabei wenigstens eine Kanalplatte 14 zur Ölführung der hydraulischen Steuerung bzw. Steuervorrichtung 4, welche mit einer Verschlußplatte 15 der Kühleinrichtung 11 gekoppelt ist. Vorzugsweise ist gleichzeitig die Kanalplatte 14 als Verschlußplatte 15 der Kühleinrichtung 11 ausgeführt. Die Verschlußplatte 15 beziehungsweise die Kanalplatte 14 ist dann Bestandteil eines Gehäuses 16 der Kühleinrichtung 11. Dieses wird im dargestellten Fall des weiteren zum Teil von der Ölwanne 10 gebildet. Die Kanalplatte 14, welche vorzugsweise gleichzeitig als Verschlußplatte 15 der Kühleinrichtung 11 ausgeführt ist, umfaßt dabei wenigstens einen, vorzugsweise jedoch eine Mehrzahl von Kanälen zur Führung des Betriebsmittels der hydraulischen Steuervorrichtung 4. Die Kühlung erfolgt dabei direkt oder indirekt durch Wärmeleitung oder Wärmeübergang. Vorzugsweise ist die Kühleinrichtung 11 in Form eines Wärmetauschers, welcher hinsichtlich seiner konstruktiven Ausgestaltung und Realisierung der Funktionsweise verschiedenartig ausgebildet sein kann, ausgeführt. Die Kühleinrichtung 11 ist dabei derart dimensioniert, daß keine Vergrößerung der äußeren Kontur der Getriebebaueinheit gegenüber konventionellen Ausführungen erzielt wird. Dadurch wird es möglich, die erfindungsgemäß gestaltete Getriebebaueinheit 1 mit einer erfindungsgemäß gestalteten Steuerplattform 17, welche von Trägerelement 5 gebildet wird und das Steuersystem 2 trägt, in immer kleiner werdende Einbauräume zu integrieren. Des weiteren wird durch die Vorgabe der Anordnung der Kühleinrichtung 11 in der Ölwanne 10 die mögliche Variantenanzahl hinsichtlich möglicher Kühlerpositionen erheblich reduziert. Des weiteren können zusätzliche Schlauch- bzw. Rohrverbindungen zwischen der Getriebebaueinheit 1 und der Kühleinrichtung 11 entfallen. Dies gilt auch für eventuell erforderliche Halterungen, mit denen die Kühleinrichtung 11 an der Getriebebaueinheit 1, insbesondere dem Gehäuse 6 befestigt werden muß. Die Kühlung der elektronischen Steuervorrichtung 3 wird dabei vorzugsweise derart realisiert, daß der hier nicht dargestellte Kühlmittelvorlauf zur Kühleinrichtung 11, insbesondere den einzelnen als Wärmetauscher ausgeführten Kühlem 12.1 bzw. 12.2 im Gehäuse 7 der elektrischen Steuervorrichtung angeordnet ist Vorzugsweise ist der Vorlaufkanal in einer Gehäusewand des Gehäuses 7 der elektronischen Steuervorrichtung 3 angeordnet, wobei die Führung des Vortaufkanales am Boden, der Seite oder der Oberseite des Gehäuses 7 erfolgen kann.

Eine weitere Möglichkeit ist die komplette Kapselung der elektronischen Steuerung und wärmetechnische Anbindung der Kapsel an die wasserführende Gehäusewand der Kühleinrichtung. Die Kapsel ist vom übrigen Getriebe durch Luftspalte getrennt. Zur Minderung der mechanischen Beanspruchung durch Schwingungen ist die Kapsel mit Dämpfungselementen im Getriebe gelagert.

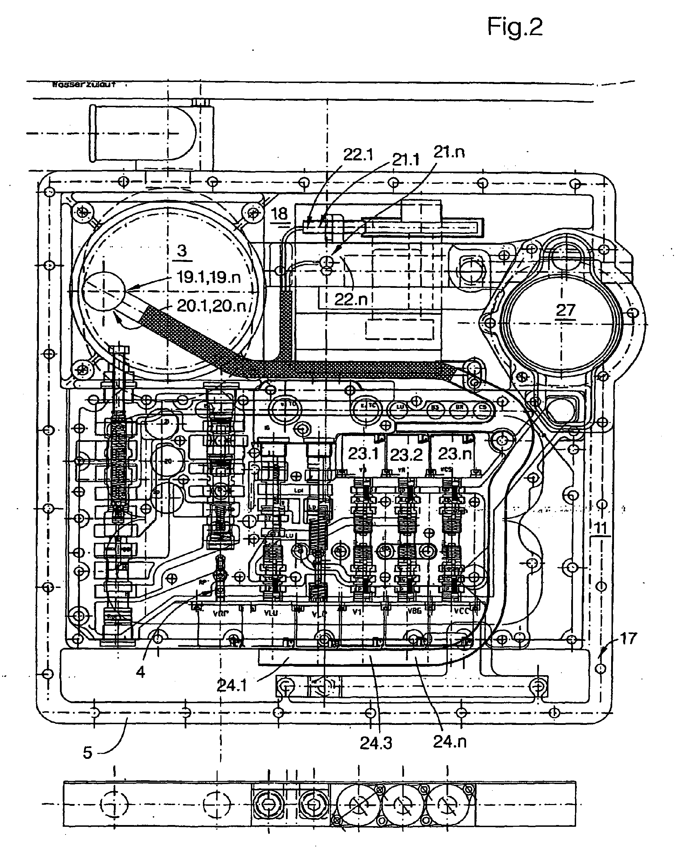

Die Figur 1 verdeutlicht in schematisch vereinfachter Darstellung anhand eines Ausschnittes aus einer Getriebebaueinheit 1 eine bevorzugte Ausführung der erfindungsgemäßen räumlich nahen Anordnung von elektronischer Steuervorrichtung 3 und hydraulischer Steuervorrichtung 4, vorzugsweise mit zusätzlich vorgesehener Kühleinrichtung 11. Die erfindungsgemäße Lösung ist jedoch nicht auf diese Ausführung beschränkt. Andere Anordnungsmöglichkeiten sind denkbar. Des weiteren bestehen bezüglich der konkreten Ausgestaltung der elektronischen Steuervorrichtung 3 und der hydraulischen Steuervorrichtung 4 eine. Vielzahl von Möglichkeiten. Die elektronische Steuervorrichtung 3 umfaßt dazu wenigstens eine elektronische Steuereinrichtung 18, welche wenigstens einen Eingang 19 und wenigstens einen Ausgang 20 aufweist. Dies wird beispielhaft in der Figur 2 in einer Ansicht von oben auf eine erfindungsgemäß gestaltete Steuerplattform 17 ersichtlich. Die Eingänge 19.1 bis 19.N sind dabei mit Einrichtungen 21.1 bis 21 .N zur wenigstens mittelbaren Erfassung einer, den aktuellen Fahrzustand und/oder einen aktuellen Fahrerwunsch nach Veränderung des aktuellen Fahrzustandes und/oder der Betriebsweise der Getriebebaueinheit gekoppelt. Die Einrichtungen 21.N sind vorzugsweise in Form von Sensoren ausgeführt, welche die den Fahrzustand und/oder den aktuellen Fahrerwunsch und/oder die Betriebsweise wenigstens mittelbar charakterisierenden Größen in entsprechende elektrische Signale zur Verarbeitung in der elektronischen Steuereinrichtung umwandeln. Die Steuereinrichtung 18 verarbeitet dabei die an den Eingängen 19.1 bis 19.N anliegenden Signale und bildet dementsprechend die Stellsignale zur Ansteuerung der Stellelemente zur Änderung der Betriebsweise der Getriebebaueinheit 1. Die Stellsignale bilden dabei die Eingangsgrößen der hydraulischen Steuervorrichtung 4. Die hydraulische Steuervorrichtung 4 umfaßt dazu wenigstens eine, vorzugsweise eine Mehrzahl von hydraulischen Steuereinrichtungen 23.1 bis 23.N, welche ebenfalls wenigstens einen Eingang 24.1 bis 24.N aufweisen, wobei die Eingänge 24.1 bis 24.N mit den Ausgängen 20.1 bis 20.N der elektronischen Steuereinrichtung 18 der elektronischen Steuervorrichtung 3 gekoppelt sind. Das am Ausgang 20.1 bzw. in den Ausgängen 20.1 bis 20.N ausgegebene Stellsignal bzw. die Stellsignale werden als Steuersignal bzw. Steuersignale für die hydraulische Steuervorrichtung 4 verwendet. Über die hydraulische Steuereinrichtung 4, beispielsweise in Form wenigstens einer elektromagnetisch betätigbaren Ventileinrichtung wird das Steuersignal bzw. werden die Steuersignale zur Ansteuerung der Stellelemente 23.1 bis 23 N zur Änderung der Betriebsweise der Getriebebaueinheit 1 genutzt. Diese Stellelemente 23.1 bis 23.N werden als Aktuatoren bezeichnet. Diese dienen beispielsweise der Betätigung einzelner zur Realisierung eines Gangwechsels zu betätigender Kupplungs- und/oder Bremseinrichtungen der Getriebebaueinheit 1. Vorzugsweise sind dabei alle Elemente der elektronischen Steuervorrichtung 3 und der hydraulischen Steuervorrichtung 4 auf dem Trägerelement 5 angeordnet. Dadurch wird es möglich, eine komplette Verkabelung aller Aktoren 23.1 bis 23.N und/oder Sensoren 22.1 bis 22.N mit der elektronischen Steuereinrichtung 18 zu erzielen; wodurch die Möglichkeit geschaffen wird, eine separate Prüfung der kompletten Einheit, umfassend Sensoren, Aktoren einschließlich Ölversorgung und Steckverbindung vorzunehmen. Vorzugsweise ist die hydraulische Steuervorrichtung 4 derart ausgeführt, daß ebenfalls alle Elemente in optimaler Raumausnutzung zueinander angeordnet sind. Dadurch wird es möglich, daß die gesamte hydraulische Steuerung 4 der Getriebebaueinheit 1, welche beispielsweise eine hydrodynamische Drehzahl/Drehmomentenwandlungseinrichtung, Schaltelemente und einen Retarder umfassen kann, in einem einzigen Gehäuse zusammenfaßbar ist. Die hydraulischen Übergänge zur Getriebebaueinheit 1 und/oder die Ausbildung der Sensoren 22.1 bis 22.N erfolgt dabei derart, daß die Montage der kompletten Baueinheit, d.h. der Steuerplattform 17 in Einbaulage der Getriebebaueinheit 1 betrachtet von unten das heißt unterhalb der Getriebesymmetrieachse S erfolgen kann. Die Abdichtung erfolgt dann mittels Steckrohren oder ähnlichen Dichtungen. Damit können alle oberhalb des Trägerelementes 5, insbesondere der Steuerplattform 17 aufgeführten Bauelemente im Fahrzeug ohne Getriebeausbau nach Abnahme der Steuerplattform 17 für sich gewartet werden. Vorzugsweise sind dazu auf der Steuerplattform 17 neben der elektronischen und hydraulischen Steuervorrichtung die Kühlereinrichtung 11, alle erforderlichen Erfassungseinrichtungen 21.1 bis 21.N, alle Betriebs- beziehungsweise Steuerbeziehungsweise Schmiermittelverbindungen, sowie zusätzliche Elemente wie Ölpumpe und Saugfilter angeordnet.

Neben der Reduzierung der Länge der zur elektrischen Kopplung erforderlichen Leitungsverbindung, insbesondere zwischen den einzelnen Einrichtungen zur wenigstens mittelbaren Erfassung einer, den aktuellen Fahrzustand und/oder die Betriebsweise der Getriebebaueinheit und/oder einen Fahrerwunsch wenigstens mittelbar beschreibenden Größe, der elektronischen Steuervorrichtung sowie der elektronischen Steuervorrichtung und den Aktuatoren kann zur Verfügung zu stellende Bauraum erheblich reduziert werden. Des weiteren wird durch die Anordnung der elektronischen Steuervorrichtung in der Getriebebaueinheit 1 eine individuelle Abstimmung der Steuervorrichtung auf die jeweilige Getriebebaueinheit möglich, ohne daß bei einem Austausch der Getriebebaueinheit 1 eine Umprogrammierung der Steuereinrichtung vorgenommen werden muß. Die eindeutige Zuordnung von Getriebebaueinheit und elektronischer Steuervorrichtung ermöglicht eine Vereinfachung der Logistik. Des weiteren wird durch die Integration der elektronischen Steuervorrichtung in die Getriebebaueinheit 1 und der unmittelbaren räumlichen Anordnung der elektronischen Steuervorrichtung 3 die Schaffung einer prüfbaren Einheit von elektronischen Steuervorrichtung, hydraulischer Steuervorrichtung einschließlich Aktorik und Sensorik der Getriebebaueinheit 1, wobei die einzelnen Steuervorrichtungen - elektronische Steuervorrichtung und/oder hydraulische Steuervorrichtung bereits an die getriebespezifischen Toleranzen während des Prüfvorganges anpaßbar sind, ermöglicht.

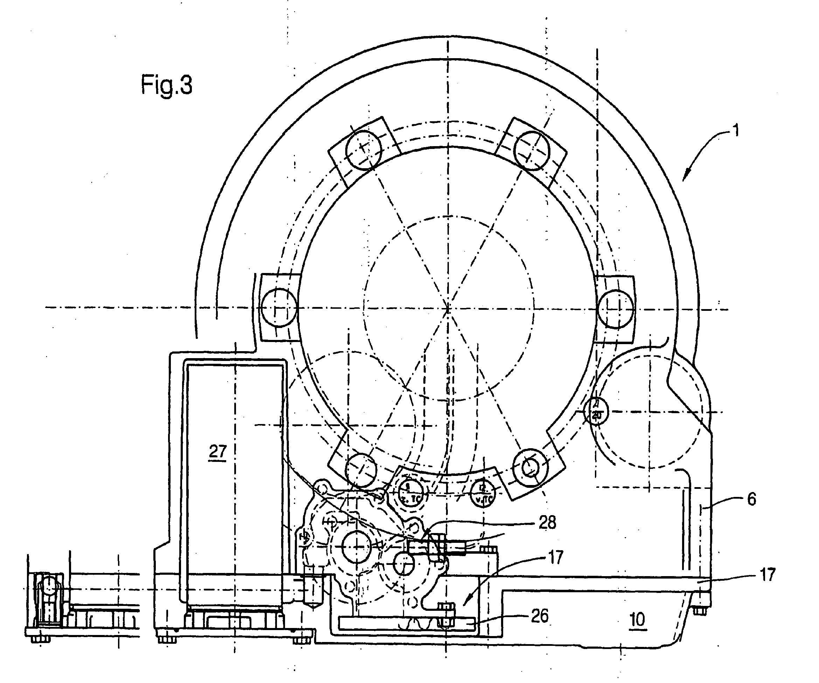

Unter einem weiteren Aspekt der Erfindung sind in der Steuerplattform 17 weitere Einrichtungen integriert. Als diese kommen beispielsweise eine Ölpumpe mit Saugfilter 26 und ein Feinfilter 27 in Betracht. Dies wird aus den Figuren 2 in einer Ansicht auf eine erfindungsgemäß gestaltete Steuerplattform 17 von oben und in der Figur 3 in einer Ansicht auf eine Getriebebaueinheit gemäß Figur 1 von rechts ersichtlich. Des weiteren erkennbar ist eine Zahnradpumpe 28, wie sie zur Betriebsmittelversorgung in Getriebebaueinheiten 1 verwendet wird.

Die in der Figur 1 dargestellte erfindungsgemäße Ausführung stellt eine bevorzugte besonders vorteilhafte Ausgestaltung einer Steuerungsplattform 17 dar. Die Erfindung ist jedoch nicht auf diese konkrete Ausführung beschränkt. Andere Ausführungsmöglichkeiten, welche von dem Grundgedanken der unmittelbaren räumlichen Anordnung von elektronischer Steuervorrichtung 3 und hydraulischer Steuervorrichtung 4 Gebrauch machen, wobei vorzugsweise beide auf einem gemeinsamen Trägerelement 5 angeordnet sind, sind ebenfalls denkbar.

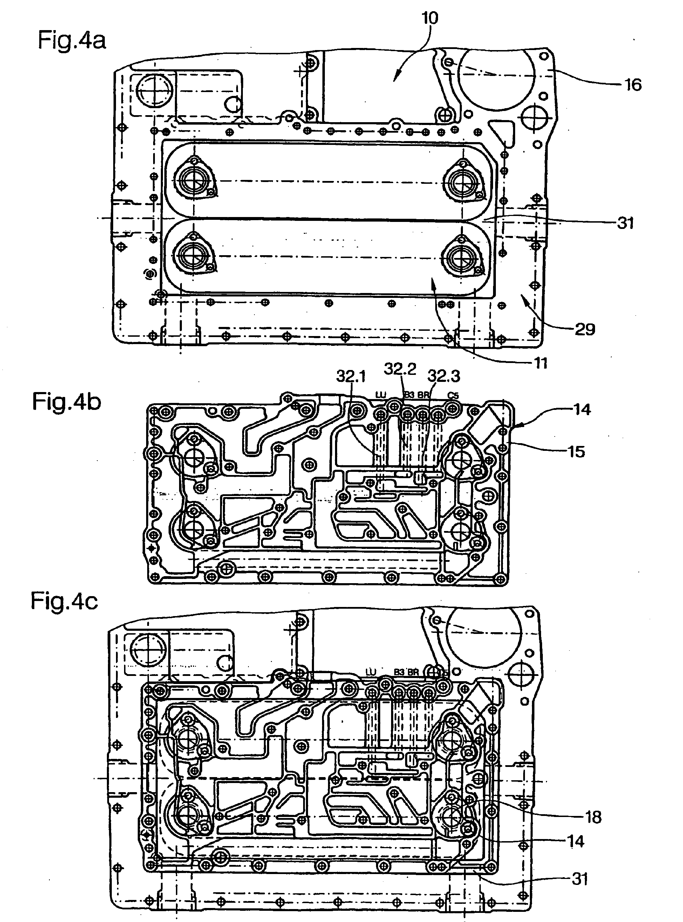

Die Figur 4a verdeutlicht in einer Ansicht von oben eine Ansicht auf die Ölwanne 10 und den von dieser ausgeformten Teil zur Aufnahme der Kühleinrichtung 11. Das Gehäuse der Ölwanne 10 kann dabei beispielsweise vom Getriebegehäuse gebildet werden. Denkbar ist jedoch auch die Ölwanne als separates Gehäuseunterteilelement auszuführen, welches dann in Einbaulage mit dem restlichen Getriebegehäuse montiert wird. Die Ausformung der Wandbereiche 29 zur Bildung des Gehäuses 16 der Kühleinrichtung kann dabei derart erfolgen, daß in einer auf einer Seite geschlossenen Ölwanne 10 durch entsprechendes Vorsehen einer Zwischenwand 30 eine Kammer 31 zur Aufnahme der Kühlelemente bzw. Kühleinrichtung 11 geschaffen wird. Eine weitere, hier im einzelnen nicht dargestellte Möglichkeit besteht darin, die hier im einzelnen nicht dargestellte Unterseite im Bereich der Kammer 31 zur Aufnahme der Kühleinrichtung 11 an dieser Unterseite offen zu lassen und den Kühleinrichtungen zusätzlich eine Verschlußplatte zuzuordnen, welche dann die Ölwanne 10 im Bereich der Kammer 31 von unten verschließt. Insbesondere bei Anordnung der elektronischen Steuervorrichtung 3 und der hydraulischen Steuervorrichtung 4 auf einem gemeinsamen Tragelement 5 ist diese Lösung von besonderem Vorteil, da diese eine Austauschbarkeit ohne vollständige Trennung der

Ölwanne vom restlichen Getriebegehäuse 16 erlaubt, indem lediglich bei Notwendigkeit sowohl die Kühleinrichtung 11 und die dann in Einbaulage darüber angeordnete Steuerungsplattform 17 mit der elektronischen Steuervorrichtung 3 und der hydraulischen Steuervorrichtung 4 ausgetauscht werden kann.

Die Figur 4b verdeutlicht in einer Ansicht von oben die Verschlußplatte 15 der Kühleinrichtung 11, welche gleichzeitig in besonders vorteilhafter Weise gleichzeitig als Kanalplatte 14 zur Führung der Kanäle für die hydraulische Steuervorrichtung 4 ausgebildet ist. Einzelne Kanäle sind hier mit 32.1 bis 32.N beispielhaft bezeichnet. Diese Kanalplatte 14 verschließt die Kammer 31 gegenüber dem Innenraum des Getriebes.Diese wird dazu auf die Wandbereiche 29 aufgelegt und kann an diesen befestigt werden.

Die Figur 4c verdeutlicht dabei in einer Ansicht von oben die auf die Kammer 31 montierte Kanalplatte 14, wobei vorzugsweise die Kanalplatte 14 neben den Kanälen 32.1 bis 32.N die elektronische Steuereinrichtung 18 trägt.

### Bezugszeichenliste

- 1: Getriebebaueinheit
- 2: Steuersystem
- 3: elektronische Steuervorrichtung
- 4: hydraulische Steuervorrichtung
- 5: Trägerelement
- 5.1: erstes Trägerteilelement
- 5.2: zweites Trägerteilelement
- 6: Gehäuse
- 7: Gehäuse der elektronischen Steuervorrichtung
- 8: Gehäuse der hydraulischen Steuervorrichtung
- 9: Ölsumpf
- 10: Ölwanne
- 11: Kühleinrichtung
- 12: Kühler
- 13: Mittel zur thermischen Kopplung des Steuersystems 2 mit der Kühleinrichtung 11
- 14: Kanalplatte
- 15: Verschlußplatte der Kühleinrichtung
- 16: Gehäuse
- 17: Steuerungsplattform
- 18: elektrische Steuereinrichtung
- 19.1-19.N: Eingänge der elektrischen Steuereinrichtung
- 20.1-20.N: Ausgänge der elektrischen Steuereinrichtung
- 21.1-21.N: Einrichtungen zur wenigstens mittelbaren Erfassung einer den aktuellen Fahrzustand und/oder die Betriebsweise der Getriebebaueinheit und/oder eines Fahrerwunsches wenigstens mittelbar charakterisierenden Größen
- 22.1-22.N: Sensoren
- 23.1-23.N: hydraulische Steuereinrichtungen

- 24.1-24.N: Eingänge der hydraulischen Steuereinrichtung
- 26: Ölpumpe mit Saugfilter
- 27: Feinfilter
- 28: Zahnradpumpe
- 29: Wandbereiche
- 30: Zwischenwand
- 31: Kammer
- 32.1-32.N: Kanäle

## Patentansprüche

1. Getriebebaueinheit (1) mit einem Getriebegehäuse (6); mit einer dieser zugeordneten elektronischen Steuervorrichtung (3), umfassend wenigstens eine Steuereinrichtung (18) und einer hydraulischen Steuervorrichtung (4); worin die elektronische Steuereinrichtung (18) und die hydraulische Steuervorrichtung (4) sind im Getriebegehäuse (6) und in unmittelbarer räumlicher Nähe zueinander angeordnet, und mit einem, den einzelnen Getriebeelementen zuordenbaren Betriebsmittel- und/oder Schmiermittel- und/oder Steuermittelkreislauf; vorgesehen mit eine Kühleinrichtung (11) zur Kühlung des Betriebs- und/oder Steuer- und/oder Schmiermittels, **gekennzeichnet durch** die folgenden Merkmale: der Kühleinrichtung (11) ist eine Verschlußplatte (15) zugeordnet; und die Verschlußplatte (15) bildet die Kanalplatte für die Führung des Betriebs- und/oder Steuer- und/oder Schmiermittels der hydraulischen Steuervorrichtung (4).

2. Getriebebaueinheit (1)nach Anspruch 1, **dadurch gekennzeichnet, daß** die Anordnung der elektronischen Steuervorrichtung (18) und der hydraulischen Steuervorrichtung (4) in Einbaulage der Getriebebaueinheit (1) betrachtet unterhalb der theoretischen Verlängerung der Eingangswelle erfolgt.

3. Getriebebaueinheit (1) nach einem der Ansprüche 1 oder 2, **dadurch gekennzeichnet, daß** die elektronische Steuereinrichtung (18) und die hydraulische Steuervorrichtung (4) in horizontaler Richtung nebeneinander betrachtet angeordnet sind.

4. Getriebebaueinheit (1) nach einem der Ansprüche 1 bis 3, **dadurch gekennzeichnet,**
**daß** die hydraulische Steuervorrichtung und elektronische Steuereinrichtung (3, 4) in vertikaler Richtung zueinander versetzt angeordnet sind.

5. Getriebebaueinheit (1) nach Anspruch 4, **dadurch gekennzeichnet, daß** die Kühleinrichtung (11) neben der elektronischen Steuereinrichtung (18) angeordnet ist.

6. Getriebebaueinheit (1) nach Anspruch 1 oder 4, **dadurch gekennzeichnet,**
**daß** die Kühleinrichtung (11) zwischen der elektronischen Steuereinrichtung (18) und der hydraulischen Steuervorrichtung (4) angeordnet ist

7. Getriebebaueinheit (1) nach einem der Ansprüche 1 bis 6, **dadurch gekennzeichnet,**
**daß** die Kühleinrichtung (11) in einer Ölwanne (10) der Getriebebaueinheit (1) angeordnet ist.

8. Getriebebaueinheit (1) nach Anspruch 7, **dadurch gekennzeichnet, daß** der Kühleinrichtung (11) ein Gehäuse (16) zugeordnet ist und das Gehäuse (16) der Kühleinrichtung (11) wenigstens teilweise von einer Wand der Ölwanne (10) der Getriebebaueinheit (1) und der Kanalplatte (14) gebildet wird.

9. Getriebebaueinheit (1) nach einem der Ansprüche 1 bis 8, **dadurch gekennzeichnet,**
**daß** die hydraulische Steuervorrichtung (4) und die elektronische Steuereinrichtung (18) auf wenigstens einem Trägerelement (5) angeordnet sind.

10. Getriebebaueinheit (1) nach Anspruch 9, **dadurch gekennzeichnet, daß** die Trägerelemente (5) von Trägerteilelementen (5.1, 5.2) gebildet werden, die zu einer baulichen Einheit zusammenfaßbar sind.

11. Getriebebaueinheit (1) nach einem der Ansprüche 9 oder 10, **dadurch gekennzeichnet,**
**daß** die elektronische Steuereinrichtung (18), die hydraulische Steuervorrichtung (4) und die Kühleinrichtung (11) sowie die Trägerelemente (5) zu einer baulichen Einheit in Form einer Steuerungsplattform (17) zusammenfaßbar sind.

12. Getriebebaueinheit (1) nach Anspruch 11, **gekennzeichnet durch** die folgenden Merkmale:
dem Betriebsmittel- und/oder Steuermittel- und/oder Schmiermittel- und/oder Kühlmittelkreislauf sind wenigstens eine Pumpeinrichtung (26, 28) und/oder eine Filtereinrichtung (27) zugeordnet; und die Pump- und/oder Filtereinrichtung (26, 27, 28) sind auf der Steuerungsplattform (17) angeordnet.

13. Getriebebaueinheit (1) nach einem der Ansprüche 11 oder 12, **gekennzeichnet durch** die folgenden Merkmale:
die elektronische Steuervorrichtung (3) umfaßt wenigstens eine Steuereinrichtung (18);
den einzelnen Getriebeelementen in der Getriebebaueinheit (1) sind Einrichtungen (21.1 - 21.n) zur wenigstens mittelbaren Erfassung einer den aktuellen Fahrzustand und/oder die Betriebsweise der Getriebebaueinheit (1) und/oder eines Fahrerwunsches wenigsten mittelbar charakterisierenden Größe Innerhalb des Gehäuses (6) der Getriebebaueinheit (1) zugeordnet;
die Einrichtungen (21. - 21.c) sind mit der Steuereinrichtung (18) koppelbar;
wenigstens ein Teil der Einrichtungen (2.1 - 21.n) sind auf der Steuerungsplattform (17) angeordnet.

14. Steuerungsplattform (17) einer Getriebebaueinheit (1) mit mindestens einer elektronischen Steuereinrichtung (18) und einer hydraulischen Steuervorrichtung (4);
mit einer Trageinrichtung, umfassend wenigstens ein Trägerelement (5); worin
die elektronische Steuereinrichtung (18) und die hydraulische Steuervorrichtung (4) sind auf der Trägereinrichtung gelagert; und mit einer den Betriebsmittel- und/oder Steuermittel- und/oder Schmiermittelkreisläufen der Getriebebaueinheit (1) zugeordneten Kühleinrichtung (11), der eine Verschlußplatte (15) zugeordnet ist; **gekennzeichnet durch** das folgende Merkmal:
die Verschlußplatte (15) bildet die Kanalplatte für die Führung des Betriebs- und/oder Steuer- und/oder Schmiermittels der hydraulischen Steuervorrichtung (4).

15. Steuerungsplattform (17) nach Anspruch 14, **dadurch gekennzeichnet**, das elektronische Steuereinrichtung (18) und hydraulische Steuervorrichtung (4) auf einem Trägerelement (5) gelagert sind.

16. Steuerungsplattform (17) nach einem der Ansprüche 14 oder 15, **dadurch gekennzeichnet,**
**daß** die Kühleinrichtung (11) neben der elektronischen Steuervorrichtung (3) oder der hydraulischen Steuervorrichtung (4) angeordnet ist.

17. Steuerungsplattform (17) nach einem der Ansprüche 14 oder 15, **dadurch gekennzeichnet, daß** die Kühleinrichtung (11) zwischen der elektronischen und der hydraulischen Steuervorrichtung (3, 4) angeordnet ist.

18. Steuerungsplattform (17) nach einem der Ansprüche 14 bis 17, **dadurch gekennzeichnet, daß** die elektronische Steuervorrichtung (3) und die hydraulische Steuervorrichtung (4) nebeneinander angeordnet sind.

19. Steuerplattform (17) nach einem der Ansprüche 14 bis 18, **dadurch gekennzeichnet, daß** die elektronische Steuervorrichtung (3) und die hydraulische Steuervorrichtung (4) übereinander angeordnet sind.

20. Steuerplattform (17) nach einem der Ansprüche 18 oder 19, **dadurch gekennzeichnet, daß** elektronische Steuervorrichtung (3) und hydraulische Steuervorrichtung (4) in horizontaler oder vertikaler Richtung versetzt zueinander angeordnet sind.

21. Steuerungsplattform (17) nach einem der Ansprüche 14 bis 20, **dadurch gekennzeichnet, daß** diese den Betriebsmittel- und/oder Steuermittel- und/oder Schmiermittel- und/oder Kühlmittelkreisläufen der Getriebebaueinheit zugeordnete Pumpeinrichtungen (26, 28) und/oder Filtereinrichtungen (27) umfaßt.

## Claims

1. A transmission module (1), comprising a transmission housing (6), an electronic control apparatus (3) which is associated with the same and comprises at least one control device (18) and a hydraulic control apparatus (4), wherein the electronic control device (18) and the hydraulic control apparatus (4) are arranged in the transmission housing (6) and in direct vicinity to each other, and a single operating medium circulation and/or lubricant circulation and/or control medium circulation which can be associated with the individual transmission elements, provided with a cooling device (11) for cooling the operating medium and/or control medium and/or lubricant, **characterized by** the following features:
the cooling device (11) is associated with a sealing plate (15), and the sealing plate (15) forms the manifold plate for guiding the operating medium and/or control medium and/or lubricant of the hydraulic control apparatus (4).

2. A transmission module (1) according to claim 1, **characterized in that** the arrangement of the electronic control apparatus (18) and the hydraulic control apparatus (4) occurs beneath the theoretical extension of the input shaft when seen in the mounting position of the transmission module (1).

3. A transmission module (1) according to one of the claims 1 or 2, **characterized in that** the electronic control device (18) and the hydraulic control apparatus (4) are arranged next to one another when seen in the horizontal direction.

4. A transmission module (1) according to one of the claims 1 to 3, **characterized in that** the hydraulic control apparatus and the electronic control device (3, 4) are arranged offset to one another in the vertical direction.

5. A transmission module (1) according to claim 4, **characterized in that** the cooling device (11) is arranged adjacent to the electronic control device (18).

6. A transmission module (1) according to claim 1 or 4, **characterized in that** the cooling device (11) is arranged between the electronic control device (18) and the hydraulic control apparatus (4).

7. A transmission module (1) according to one of the claims 1 to 6, **characterized in that** the cooling device (11) is arranged in an oil pan (10) of the transmission module (1).

8. A transmission module (1) according to claim 7, **characterized in that** a housing (16) is associated with the cooling device (11) and the housing (16) of the cooling device (11) is formed at least partly by a wall of the oil pan (10) of the transmission module (1) and the manifold plate (14).

9. A transmission module (1) according to one of the claims 1 to 8, **characterized in that** the hydraulic control apparatus (4) and the electronic control device (18) are arranged on at least one carrier element (5).

10. A transmission module (1) according to claim 9, **characterized in that** the carrier elements (5) are formed by partial carrier elements (5.1, 5.2) which can be combined into a modular unit.

11. A transmission module (1) according to one of the claims 9 or 10, **characterized in that** the electronic control device (18), the hydraulic control apparatus (4) and the cooling device (11) as well as the carrier elements (5) can be combined into a modular unit in the form of a control platform (17).

12. A transmission module (1) according to claim 11, **characterized by** the following features:
at least one pump device (26, 28) and/or a filter device (27) are associated with the operating medium circulation and/or control medium circulation and/or the lubricant circulation, and the pump and/or filter device (26, 27, 28) are arranged on the control platform (17).

13. A transmission module (1) according to one of the claims 11 or 12, **characterized by** the following features:
the electronic control apparatus (3) comprises at least one control device (18), the individual transmission elements in the transmission module (1) are associated with devices (21.1 to 21.n) within the housing (6) of the transmission module (1) for detecting at least indirectly a variable characterizing the current driving state and/or operating mode of the transmission module (1) and/or a driver's request, the devices (21. to 21.c) can be coupled with the control device (18), at least a part of the devices (2.1 to 21.n) are arranged on the control platform (17).

14. A control platform (17) of a transmission module (1), comprising at least one electronic control device (18) and a hydraulic control apparatus (4), a carrier device having at least one carrier element (5), wherein the electronic control device (18) and the hydraulic control apparatus (4) are held on the carrier device, and a cooling device (11) associated with the operating medium circulation and/or control medium circulation and/or lubricant circulation of the transmission module (1), to which cooling device is associated a sealing plate (15), **characterized by** the following feature:
the sealing plate (15) forms the manifold plate for the guidance of the operating medium and/or control medium and/or lubricant of the hydraulic
control apparatus (4).

15. A control platform (17) according to claim 14, **characterized in that** the electronic control device (18) and the hydraulic control apparatus (4) are held on a carrier element (5).

16. A control platform (17) according to one of the claims 14 or 15, **characterized in that** the cooling device (11) is arranged next to the electronic control apparatus (3) or the hydraulic control apparatus (4).

17. A control platform (17) according to one of the claims 14 or 15, **characterized in that** the cooling device (11) is arranged between the electronic and hydraulic control apparatus (3, 4).

18. A control platform (17) according to one of the claims 14 to 17, **characterized in that** the electronic control apparatus (3) and the hydraulic control apparatus (4) are arranged next to one another.

19. A control platform (17) according to one of the claims 14 to 18, **characterized in that** the electronic control apparatus (3) and the hydraulic control apparatus (4) are arranged above one another.

20. A control platform (17) according to one of the claims 18 or 19, **characterized in that** the electronic control apparatus (3) and the hydraulic control apparatus (4) are arranged offset to each other in the horizontal or vertical direction.

21. A control platform (17) according to one of the claims 14 to 20, **characterized in that** it comprises pump devices (26, 28) and/or filter devices (27) associated with the operating medium and/or the control medium and/or the lubricant circulations of the transmission module.

## Revendications

1. Module de transmission (1)
avec un carter de transmission (6);
avec un appareil de commande électronique (3) associé à celui-ci, comportant au moins un dispositif de commande (18) et un appareil de commande hydraulique (4), dans lequel
le dispositif de commande électronique (18) et l'appareil de commande électronique (4) sont placés dans le carter de transmission (6) et disposés à proximité immédiate l'un de l'autre, et
avec un moyen de fonctionnement et/ou un moyen de lubrification et/ou un circuit de moyens de commande pouvant être associés aux différents éléments de la transmission,
équipé d'un dispositif de refroidissement (11) pour le refroidissement du moyen de fonctionnement et/ou du moyen de commande et/ou de lubrification,
**caractérisé par** les particularités suivantes:
un tampon (15) est associé au dispositif de refroidissement (11) et
le tampon (15) constitue la plaque du canal de guidage du moyen de fonctionnement et/ou de commande et/ou de lubrification de l'appareil de commande hydraulique (4).

2. Module de transmission (1) selon la revendication 1, **caractérisé en ce que**, vue dans la position d'installation du module de transmission (1), la disposition du dispositif de commande électronique (18) et de l'appareil de commande hydraulique (4) s'effectue sous l'extension théorique de l'arbre d'entrée.

3. Module de transmission (1) selon l'une des revendications 1 ou 2, **caractérisé en ce que**, le dispositif de commande électronique (18) et l'appareil de commande hydraulique (4) sont disposés l'un à côté de l'autre, vus dans le sens horizontal.

4. Module de transmission (1) selon l'une des revendications 1 à 3, **caractérisé en ce que** l'appareil de commande hydraulique et le dispositif de commande électronique (3,4) sont décalés l'un par rapport à l'autre dans le sens vertical.

5. Module de transmission (1) selon la revendication 4, **caractérisé en ce que** le dispositif de refroidissement (11) est placé à côté du dispositif de commande électronique (18).

6. Module de transmission (1) selon la revendication 1 ou 4, **caractérisé en ce que** le dispositif de refroidissement (11) est placé entre le dispositif de commande électronique (18) et l'appareil de commande hydraulique (4).

7. Module de transmission (1) selon l'une des revendications 1 à 6, **caractérisé en ce que** le dispositif de refroidissement (11) est placé dans un carter d'huile (10) du module de transmission (1).

8. Module de transmission (1) selon la revendication 7, **caractérisé en ce que** un carter (16) est associé au dispositif de refroidissement (11) et le carter (16) du dispositif de refroidissement (11) est constitué, du moins partiellement, par une paroi du carter d'huile (10) du module de transmission (1) et la plaque du canal (14).

9. Module de transmission (1) selon l'une des revendications 1 à 8, **caractérisé en ce que** l'appareil de commande hydraulique (4) et le dispositif de commande électronique (18) sont disposés sur au moins un élément de support (5).

10. Module de transmission (1) selon la revendication 9, **caractérisé en ce que** les éléments de support (5) sont constitués par des sous-éléments de support (5.1, 5.2) qui peuvent être assemblés en une unité de construction.

11. Module de transmission (1) selon l'une des revendications 9 ou 10, **caractérisé en ce que** le dispositif de commande électronique (18), l'appareil de commande hydraulique (4) et le dispositif de refroidissement (11) ainsi que les éléments de support (5) peuvent être assemblés en une unité de construction sous la forme d'une plate-forme de commande (17).

12. Module de transmission (1) selon la revendication 11, **caractérisé par** les particularités suivantes:
au moins un dispositif de pompage (26, 28) et/ou un dispositif de filtration (27) sont associés au moyen de fonctionnement et/ou au moyen de commande et/ou au moyen de lubrification et/ou au circuit de moyens de refroidissement et
le dispositif de pompage et/ou de filtration (26, 27, 28) est disposé sur la plate-forme de commande (17).

13. Module de transmission (1) selon l'une des revendications 11 ou 12, **caractérisé par** les particularités suivantes:
l'appareil de commande électronique (3) comporte au moins un dispositif de commande (18);
des dispositifs (21.1, 21.n), servant à la détection au moins indirecte d'une grandeur à l'intérieur du carter (6) du module de transmission (1) caractérisant au moins indirectement l'état de conduite actuel et/ou le mode de fonctionnement du module de transmission (1) et/ou un souhait du conducteur, sont associés à chacun des éléments de transmission dans le module de transmission (1);
les dispositifs (21. - 21.c) peuvent être couplés avec le dispositif de commande (18) ; au moins une partie des dispositifs (2.1 - 21.n) est disposée sur la plate-forme de commande (17).

14. Plate-forme de commande (17) d'un module de transmission (1) avec au moins un dispositif de commande électronique (18) et un appareil de commande hydraulique (4);
avec un dispositif de support, comportant au moins un élément de support (5); dans lequel
le dispositif de commande électronique (18) et l'appareil de commande hydraulique (4) sont logés sur le dispositif de support; et
avec un dispositif de refroidissement (11), auquel est associé un tampon (15), associé au moyen de fonctionnement et/ou au moyen de commande et/ou aux circuits de moyens de lubrification du module de transmission (1); **caractérisée par** la particularité suivante:
le tampon (15) constitue la plaque du canal de guidage du moyen de fonctionnement et/ou de commande et/ou de lubrification de l'appareil de commande hydraulique (4).

15. Plate-forme de commande (17) selon la revendication 14, **caractérisée en ce que** le dispositif de commande électronique (18) et l'appareil de commande hydraulique (4) sont logés sur un élément de support (5).

16. Plate-forme de commande (17) selon l'une des revendications 14 ou 15, **caractérisée en ce que** le dispositif de refroidissement (11) est disposé à côté de l'appareil de commande électronique (3) ou de l'appareil de commande hydraulique (4).

17. Plate-forme de commande (17) selon l'une des revendications 14 ou 15, **caractérisée en ce que** le dispositif de refroidissement (11) est disposé entre l'appareil de commande électronique et l'appareil de commande hydraulique (3, 4).

18. Plate-forme de commande (17) selon l'une des revendications 14 à 17, **caractérisée en ce que** l'appareil de commande électronique (3) et l'appareil de commande hydraulique (4) sont disposés l'un à côté de l'autre.

19. Plate-forme de commande (17) selon l'une des revendications 14 à 18, **caractérisée en ce que** l'appareil de commande électronique (3) et l'appareil de commande hydraulique (4) sont disposés l'un au-dessus de l'autre.

20. Plate-forme de commande (17) selon l'une des revendications 18 ou 19, **caractérisée en ce que** l'appareil de commande électronique (3) et l'appareil de commande hydraulique (4) sont décalés l'un par rapport à l'autre dans le sens horizontal ou vertical.

21. Plate-forme de commande (17) selon l'une des revendications 14 à 20, **caractérisée en ce qu'**elle comporte des dispositifs de pompage (26, 28) et /ou des dispositifs de filtration (27), associés au moyen de fonctionnement et/ou au moyen de commande et/ou au moyen de lubrification et/ou au circuits de moyens de refroidissement du module de transmission.
